# EUROPÄISCHE PATENTSCHRIFT

(11) **EP 3 374 177 B1**
(45) Veröffentlichungstag und Bekanntmachung des Hinweises auf die Patenterteilung: **04.11.2020**
(21) Anmeldenummer: 15797916.2
(22) Anmeldetag: 12.11.2015
(51) Int. Cl.: B32B 5/14, B32B 27/12, B65D 73/00

(54) **VERPACKUNGSMATERIAL UND VERFAHREN ZUR HERSTELLUNG EINES VERPACKUNGSMATERIALS**
PACKAGING MATERIAL AND METHOD FOR PRODUCING A PACKAGING MATERIAL
MATÉRIAU D'EMBALLAGE ET PROCÉDÉ DE FABRICATION D'UN MATÉRIAU D'EMBALLAGE

(43) Veröffentlichungstag der Anmeldung: 19.09.2018
(73) Patentinhaber: Karatzis S.A. Industrial & Hotelier Enterprises, Heraklion (GR)
(72) Erfinder: KARATZIS, Antonios, Heraclion (GR)
(74) Vertreter: Karakatsanis, Georgios
(86) Internationale Anmeldenummer: PCT/EP2015/076483
(87) Internationale Veröffentlichungsnummer: WO 2017/080609

(56) Entgegenhaltungen:
- EP-A2- 0 754 544

## Beschreibung

Die vorliegende Erfindung bezieht sich auf ein Verpackungsmaterial sowie auf ein Verfahren zur Herstellung des Verpackungsmaterials.

Üblicherweise werden vorgedehnte Streifen aus Kunststoffmaterial zum Verpacken von Paletten, Heu, Stroh oder anderen Dingen verwendet. Beispielsweise werden Materialien wie Polyethylen (PE), Polyethylen mit hoher Dichte (high density polyethylene, HDPE), Polyethylen mit geringer Dichte (low density polyethylene, LDPE) und weitere synthetische Materialien für ein derartiges Verpackungsmaterial eingesetzt. Es kann erforderlich sein, die zu verpackenden Güter luftdicht auf einer Palette zu verpacken. Das zu verwendende Material sollte eine große Reißfestigkeit haben und einen Schutz vor Wettereinflüssen wie beispielsweise Feuchtigkeit bereitstellen. Beispielsweise werden landwirtschaftliche Produkte wie Heu, Stroh zu großen Ballen zusammengepackt. Auch rohe Baumwolle, Müll und Abfälle werden zu Ballen zusammengepackt. Dies kann beispielsweise erfolgen, indem auf die zu verpackenden Güter ein Druck ausgeübt wird und diese mit einem Netz oder einem anderen Material umhüllt werden. Nachfolgend kann ein Band, das beispielsweise aus Polyethylen aufgebaut sein kann, um den Ballen gewickelt werden.

EP 0 754 544 A2 offenbart eine Verbundfolie aus einer Trägerfolie, die mit einer Folie ("Hetero-Folie") verbunden ist, und einsetzbar ist, wo eine flauschige Oberfläche erwünscht ist, insbesondere auf dem Hygienesektor oder für Verpackungszwecke.

### ZUSAMMENFASSUNG

Der vorliegenden Erfindung liegt die Aufgabe zugrunde, ein verbessertes Verpackungsmaterial sowie ein Verfahren zu seiner Herstellung bereitzustellen.

Gemäß der vorliegenden Erfindung wird die Aufgabe durch den Gegenstand und das Verfahren der unabhängigen Patentansprüche gelöst. Bevorzugte Weiterentwicklungen sind in den abhängigen Ansprüchen dargelegt.

Der Fachmann wird zusätzliche Merkmale und Vorteile nach Lesen der folgenden detaillierten Beschreibung und Betrachten der begleitenden Zeichnungen erkennen.

Die begleitenden Zeichnungen sind enthalten, um ein tieferes Verständnis von Ausführungsbeispielen zu liefern, sie sind in diese Anmeldung einbezogen und ein Teil von dieser. Die Zeichnungen veranschaulichen die Hauptausführungsbeispiele und dienen gemeinsam mit der Beschreibung zur Erläuterung der Prinzipien der Erfindung. Weitere Ausführungsbeispiele und zahlreiche der beabsichtigten Vorteile werden beim verständigen Lesen der folgenden detaillierten Beschreibung sofort erkannt. Die Elemente der Zeichnungen sind nicht notwendigerweise maßstabsgetreu zueinander. Gleiche Bezugszeichen geben entsprechend ähnliche Teile an.
Figur 1A zeigt eine Draufsicht auf ein Verpackungsmaterial gemäß einer Ausführungsform.
Figur 1B zeigt eine Querschnittsansicht des Verpackungsmaterials.
Die Figuren 2A bis 2C zeigen Beispiele für ein Gewebe.
Figur 3 zeigt einen Querschnitt durch eine Folie.
Figur 4A zeigt ein Flussdiagramm eines Verfahrens gemäß einer Ausführungsform.
Figur 4B zeigt ein Flussdiagramm eines Verfahrens gemäß einer weiteren Ausführungsform.
Figur 5A zeigt eine Querschnittsansicht von Komponenten des Verpackungsmaterials bei seiner Herstellung.
Figur 5B zeigt Komponenten des Verpackungsmaterials bei seiner Herstellung.
Figur 6A zeigt eine schematische vergrößerte Querschnittsansicht durch einen Bereich des Verpackungsmaterials.
Figur 6B zeigt eine vergrößerte Ansicht eines Bereichs des Verpackungsmaterials.
Figur 7 zeigt eine Rolle mit aufgerolltem Verpackungsmaterial gemäß einem Ausführungsbeispiel.

### DETAILLIERTE BESCHREIBUNG

In der folgenden detaillierten Beschreibung wird auf die begleitenden Zeichnungen Bezug genommen, die einen Teil der detaillierten Beschreibung bilden und in denen zur Veranschaulichung spezifische Ausführungsbeispiele dargestellt sind, in denen die Erfindung verwirklicht werden kann. In diesem Zusammenhang wird eine Richtungsterminologie wie "Oberseite", "Boden", "Vorderseite", "Rückseite", "vorne", "hinten", und so weiter im Hinblick auf die Orientierung der in diesem Zusammenhang beschriebenen Figuren verwendet. Da die Komponenten von Ausführungsbeispielen der Erfindung in einer Vielzahl von verschiedenen Orientierungen positioniert sein können, wird die Richtungsterminologie für Zwecke der Veranschaulichung verwendet und ist in keiner Weise einschränkend. Es is selbstverständlich, dass weitere Ausführungsbeispiele verwendet und strukturelle oder logische Änderungen gemacht werden können, ohne den durch die Patentansprüche definierten Bereich zu verändern.

Die Beschreibung der Ausführungsbeispiele ist nicht einschränkend. Insbesondere können Elemente der einzelnen Ausführungsbeispiele, die im Folgenden beschrieben sind, mit Elementen von verschiedenen Ausführungsbeispielen kombiniert werden.

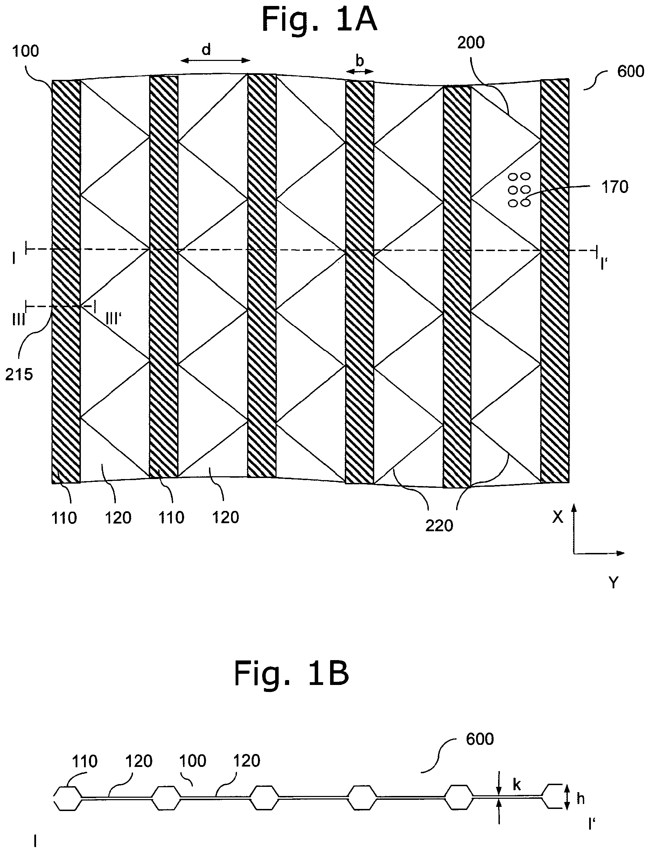

Figur 1A zeigt eine schematische Draufsicht eines Verpackungsmaterials gemäß einer Ausführungsform. Das in Figur 1A gezeigte Verpackungsmaterial 600 weist eine erste Folie bzw. Film 100 und ein Gewebe 200 auf, die übereinander angeordnet und miteinander verbunden sind. Die erste Folie 100 umfasst erste Bereiche 120, in denen die erste Folie lokal gedehnt ist, und zweite Bereiche 110, in denen die erste Folie 100 nicht lokal gedehnt ist auf. Die ersten Bereiche 120 sind jeweils zwischen zwei zweiten Bereichen 110 angeordnet. Erste und zweite Bereiche verlaufen jeweils in einer ersten Richtung, beispielsweise der X-Richtung. Das Gewebe 200 umfasst einen Faden 220, wobei ein Teil des Fadens 220 in einer Richtung verläuft, die die erste Richtung schneidet.

Beispielsweise können die ersten Bereiche 120 eine Breite d haben und die zweiten Bereiche 110 eine Breite b, wobei die Breite jeweils senkrecht zur ersten Richtung gemessen ist.

Üblicherweise wird die Folie 100 auf Rollen aufgerollt und zur Herstellung des Verpackungsmaterials abgewickelt. In diesem Fall entspricht die erste Richtung, also beispielsweise die X-Richtung, der Abwickelrichtung oder Folienflussrichtung. Die Y-Richtung verläuft senkrecht zu der Abwickelrichtung. In den ersten Bereichen 120 ist die erste Folie 100 lokal in Y-Richtung, d.h. senkrecht zur Abwickelrichtung gedehnt. Die Bereiche, in denen die Folie lokal gedehnt ist, werden auch als Gräben (Kanäle) bezeichnet, während die nicht vorgedehnten zweiten Bereiche 110 als Bänder bezeichnet werden.

Figur 1B zeigt eine Querschnittsansicht des Verpackungsmaterials, beispielsweise zwischen I und I' wie in Figur 1A angedeutet. Die Folie 100, die einen Bestandteil des Verpackungsmaterials 600 bildet, weist erste Bereiche 120 und zweite Bereiche 110 auf. Beispielsweise kann an den zweiten Bereichen 110 die Dicke h des Verpackungsmaterials größer sein als die Dicke k der ersten Folie an den ersten Bereichen 120, an denen die Folie 100 lokal gedehnt ist. Wie im Folgenden erklärt werden wird, ist die erhöhte Dicke des Verpackungsmaterials an den zweiten Bereichen 110 einerseits darauf zurückzuführen, dass an diesen Bereichen die Folie nicht lokal gedehnt ist. Weiterhin befinden sich an dieser Position gemäß einer Ausführungsform die Kettfäden des Gewebes 200.

Das beschriebene Verpackungsmaterial weist ein Gewebe bzw. Netz auf. Dieses Gewebe kann elastisch oder auch nicht elastisch sein.

Zur näheren Erläuterung werden im Folgenden die nachstehenden Bezeichnungen verwendet:
**Netz bzw. Gewebe:** dünne Bänder, die beispielsweise aus Polyolefinen wie beispielsweise LLDPE (lineares Polyethylen mit geringer Dichte), LDPE (Polyethylen mit geringer Dichte), HDPE (Polyethylen mit hoher Dichte), PVC (Polyvinylchlorid), EVA (Ethylenvinylacetat) oder aus einem ähnlichen Kunststoff hergestellt sind bzw. bestehen, werden zu einem Netz bzw. Gewebe verarbeitet. Die Größe des Gewebes ist prinzipiell gleichgültig, denn das Gewebe kann in fast jeder gewünschten Abmessung hergestellt werden.

**Fäden:** Die dünnen Bänder, aus denen das Netz aufgebaut ist. Vor ihrer finalen Dehnung haben sie eine Dicke von 15 bis 60 µm und eine Breite von 1,5 bis 10 mm.

**Kettfäden:** Die zu einem Schlingenverbund aneinander gereihten Maschen in Fließrichtung des Netzes.

**Schüsse:** Die Fäden mit einer Zick-Zack-Verflechtung, die die Kettfäden zu einem Netz verbinden.

**MD (Maschinenrichtung):** Die Fließrichtung des Netzes bei der Herstellung bzw. der Folie beim Abwickeln.

**TD (Transversalrichtung):** Die Richtung senkrecht zur Fließrichtung bzw. Maschinenrichtung.

**Film:** Eine Rolle aus einer Kunststofffolie bzw. einem Kunststofffilm wie beispielsweise Polyethylen, HDPE, LLDPE oder anderen thermoplastischen Polyolefinen, die aufgerollt ist und eine Dicke von 7 bis 60 µm und eine Breite von 500 bis 3000 mm hat. Seine Länge hängt von den Eigenschaften der Herstellungsmaschine (Extruder) ab.

**Graben (Kanal):** Definiert den ersten Bereich der Folie, welcher lokal in transversaler Richtung vorgedehnt ist und entlang der Folie in seiner Gesamtlänge verläuft.

**Streifen bzw. Band:** Verstärkung, beispielsweise in röhrenartiger Form, definiert die Fläche des Materials (zweiter Bereich), der nicht vorgedehnt ist, verläuft entlang des Films in seiner vollständigen Länge und hat die ursprüngliche Dicke der Folie.

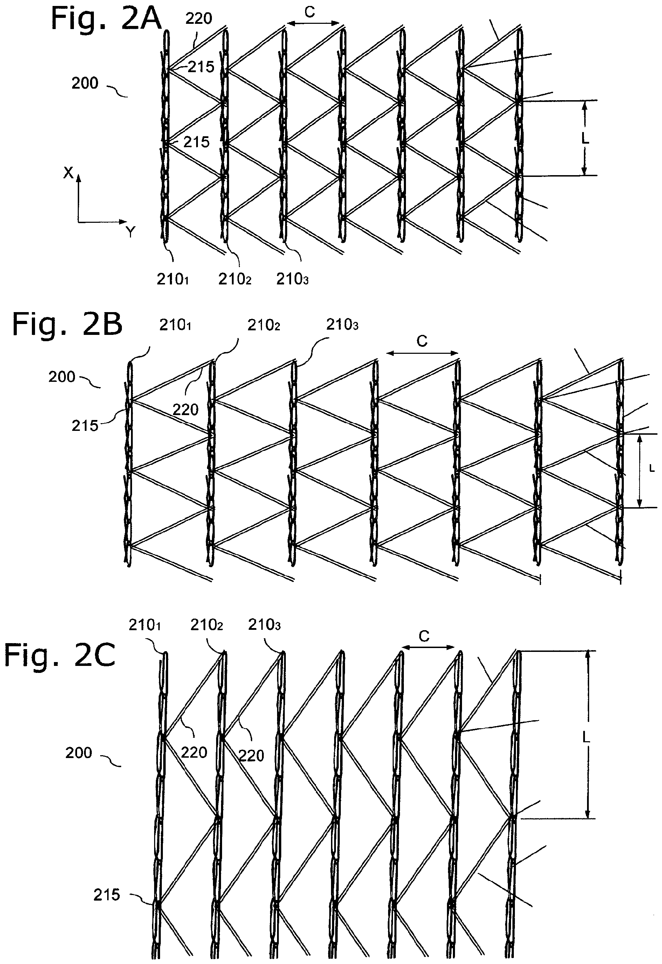

Die Figuren 2A bis 2C zeigen Beispiel für Gewebe bzw. Netze, die einen Bestandteil des Verpackungsmaterials gemäß einer Ausführungsform bilden können. Das in den Figuren 2A bis 2C gezeigte Gewebe wird beispielsweise durch eine Raschelmaschine gefertigt. Raschelmaschinen werden weitverbreitet zur Herstellung von Netzen verwendet. Derartige Netze werden beispielsweise zur Verpackung von Paletten, Stroh, zur Bildung von Stroh- und Grasballen oder aber auch zum Beschatten verwendet.

Das Gewebe 200 weist Kettfäden 210₁, 210₂,...210ₙ auf, die beispielsweise aus einer Aneinanderreihung von Maschen entlang der X-Richtung aufgebaut sind. Eine Vielzahl derartiger Kettfäden ist entlang der Breite des Gewebes angeordnet. Schussfäden 220 verlaufen zwischen zwei benachbarten Kettfäden 210₁, 210₂,...210ₙ unter Ausbildung eines Zick-Zack-Musters. Beispielsweise werden sie zwischen zwei benachbarten Kettfäden 210₁, 210₂,...210ₙ so geführt, dass sie diese miteinander verbinden. Dadurch wird eine knotenlose Verbindungstechnik ermöglicht. An den Verbindungspunkten 215 wird der Schussfaden jeweils durch den Kettfaden 210₁, 210₂,...210ₙ durchgeführt. In Abhängigkeit der jeweiligen Länge der einzelnen Schussfadensegmente im Vergleich zum Abstand C zwischen den Kettfäden 210₁, 210₂,... 210ₙ und dem Abstand L zwischen benachbarten Kreuzungspunkten 215 des Schussfadens 220 mit den Kettfaden 210₁ kann die Elastizität des Gewebes beeinflusst werden.

Beispielsweise kann, wie in Figur 2A gezeigt, ein gleichseitiges Dreieck aus Kettfadenabschnitten und Schussfadenabschnitten erzeugt werden. Wie in Figur 2B gezeigt kann die Basis des Dreiecks kleiner sein als die Seitenlänge des Dreiecks. Wie in Figur 2C gezeigt ist, kann die Basis des Dreiecks eine größere Länge L als die Seitenlänge der Dreiecke haben.

Beim Zusammenfügen der ersten Folie 100 und des Gewebes 200, können diese Elemente jeweils so ausgerichtet werden, dass die Kettfäden 210₁, 210₂, 210₃ entlang der zweiten Bereiche 110 angeordnet werden. Nach dem Miteinanderberbinden von Folie und Gewebe verlaufen dann die Schussfäden 220 über die ersten Bereiche 120, die gedehnt sind, während die Kettfäden 210₁, 210₂ mit den zweiten Bereichen 210 überlappen. Die Dimensionierung der ersten und zweiten Bereiche bei der Folie, wie in Figur 1A gezeigt, wird somit entsprechend der Abmessung des Gewebes vorgenommen. Beispielsweise wird der Abstand zwischen zweiten Bereichen 210 so eingestellt, dass dieser dem Abstand C zwischen den Kettfäden 210₁, 210₂,...210ₙ übereinstimmt.

Kettfäden und Schussfäden können jeweils aus demselben Material aufgebaut sein. Alternativ können sie unterschiedliche Materialien umfassen. Beispielsweise können Kett- und Schussfäden aus Polyolefinen beispielsweise Polyethylen, zum Beispiel LDPE, HDPE, linearem Polyethylen mit geringer Dichte (linear low-density polyethylene, LLDPE), Polyethylen mit sehr geringer Dichte (very-low-density polyethylene, VLDP), PVC oder EVA hergestellt sein. Alternativ können sie aus beliebigen anderen Fasern, die üblicherweise für derartige Zwecke verwendet werden, aufgebaut sein. Die Stärke der Fäden kann so ausgewählt werden, dass das sich ergebende Verpackungsmaterial die gewünschte Reißfestigkeit aufweist. Auch können beispielsweise Kettfäden oder Schussfäden durch mehrere parallele Fäden realisiert werden. Beispielsweise kann das Gewebe 200 eine Masse von 7 bis 11 g/laufender Meter haben. Das Gewebe 200 kann beispielsweise eine typische Breite von Gewebe, das von einer Raschelmaschine hergestellt wurde, haben. Diese kann zum Beispiel 123 cm betragen.

Die erste Folie 100 kann eine einzelne Schicht aus einem Material, beispielsweise einem Kunststoffmaterial, zum Beispiel wie vorstehend als Beispiel für die Kett- oder Schussfäden aufgeführt, aufweisen oder einen Schichtverbund aus verschiedenen Materialien umfassen. Beispielsweise kann sie einige Lagen unterschiedlicher Kunststoffe oder unterschiedlicher Olefine umfassen. Die äußeren Schichten können beispielsweise eine Klebstoffschicht, beispielsweise Polyethylen mit sehr geringer Dichte (VLDPE) oder lineares Polyethylen mit geringer Dichte (LLDPE) enthalten.

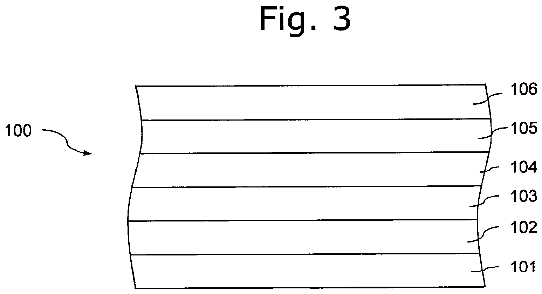

Figur 3 zeigt ein Beispiel für den mehrschichtigen Aufbau der ersten Folie 100. Beispielsweise kann die erste Folie 100 eine erste Klebstoffschicht 101 umfassen, und nachfolgend vier verschiedene Schichten 102, 103, 104, 105 aus verschiedenen Olefinen. Den Abschluss kann eine zweite Klebstoffschicht 106 bilden. Die ersten und zweiten Klebstoffschichten 101, 106 können beispielsweise ein Polyethylen mit sehr geringer Dichte oder ein lineares Polyethylen mit geringer Dichte aufweisen. Selbstverständlich können auch noch mehr Schichten verwendet werden, beispielsweise bis zu 7 Schichten.

Auch können weniger als vier Schichten verwendet werden. Die erste Folie 100 kann eine Schichtdicke von 5 bis 9 µm aufweisen. Aber auch größere Schichtdicken können verwendet werden. Die Breite der Folie kann beispielsweise 500 mm bis 3 m oder mehr sein. Das Material der Folie kann von dem oder den Materialien des Gewebes verschieden sein oder das gleiche Material sein.

Gemäß einer weiteren Ausführungsform kann das Verpackungsmaterial 600 ferner eine zweite Folie 300 aufweisen, die mit dem Gewebe 200 und der ersten Folie 100 in der Weise zusammengefügt wird, dass das Gewebe 200 sandwichartig zwischen erster Folie 100 und zweiter Folie 300 angeordnet ist. Dabei kann die zweite Folie erste Bereiche 320, in denen die zweite Folie lokal gedehnt ist und zweite Bereiche 310, in denen die zweite Folie nicht lokal gedehnt ist, enthalten. Analog zur ersten Folie verlaufen die ersten Bereiche jeweils zwischen zwei zweiten Bereichen und in einer ersten Richtung. Der Verbund aus erster Folie, zweiter Folie und Gewebe kann ferner beliebige weitere Schichten wie beispielsweise Klebstoffschichten etc. aufweisen. Die zweite Folie kann beispielsweise denselben Aufbau wie die erste Folie haben. Alternativ kann sie einen anderen Aufbau haben, so dass das sich ergebende Verpackungsmaterial an verschiedenen Oberflächen unterschiedliche Eigenschaften aufweist. Beispielsweise kann die zweite Folie andere Schichten als die erste Folie enthalten. Weiterhin kann auf der Außenseite der ersten Folie eine Klebstoffschicht angeordnet sein, auf der Außenseite der zweiten Schicht jedoch nicht oder umgekehrt.

Die erste und/oder die zweite Folie können Mikrolöcher 170 aufweisen. Der Begriff "Mikrolöcher" umfasst dabei Löcher mit einem maximalen Öffnungsdurchmesser von kleiner als 1 µm. Beispielsweise kann auch nur die erste Folie oder nur die zweite Folie Mikrolöcher aufweisen, während die jeweils andere Folie keine Mikrolöcher hat. In diesem Fall können auf jeder Oberseite des Verbunds unterschiedliche Eigenschaften des Verpackungsmaterials bereitgestellt werden. Beispielsweise können die Mikrolöcher 170 derart bemessen sein, dass sie durchlässig für Wasserdampf nicht aber für Wasser sind. Auf diese Weise kann ein atmungsaktives Verpackungsmaterial bereitgestellt werden.

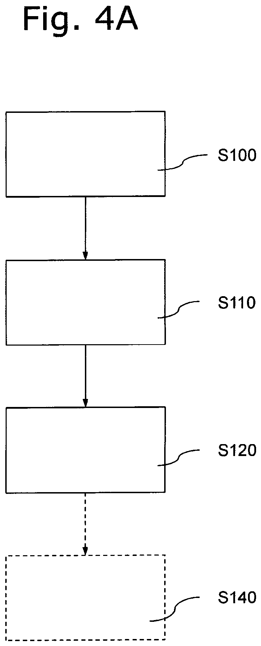

Fig. 4A veranschaulicht ein Verfahren zur Herstellung von Verpackungsmaterial gemäß einem Ausführungsbeispiel. Das Verfahren umfasst lokales Vordehnen (S100) von ersten Bereichen einer ersten Folie, wobei die ersten Bereiche entlang einer ersten Richtung verlaufen, so dass zweite Bereiche, die jeweils in der ersten Richtung verlaufen, definiert werden, wobei die ersten Bereiche jeweils zwischen zwei zweiten Bereichen angeordnet sind, das Anordnen eines Gewebes (S110), welches einen Faden umfasst, wobei ein Teil des Fadens in einer Richtung verläuft, die die erste Richtung schneidet, über der ersten Folie, und das Miteinanderverbinden (S120) des Gewebes mit der Folie. Das Verfahren kann ferner das Auftragen (S140) eines Klebestoffs auf der ersten Folie umfassen.

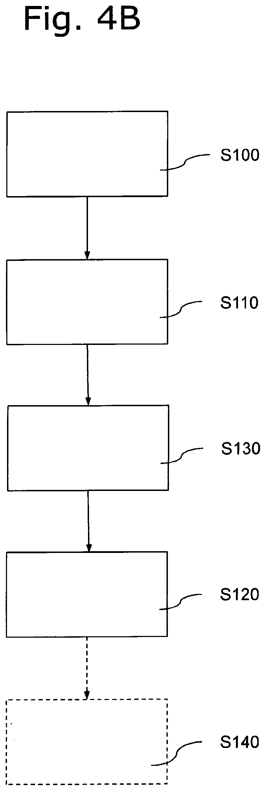

Fig. 4B veranschaulicht ein Verfahren zur Herstellung von Verpackungsmaterial gemäß einem Ausführungsbeispiel. Das Verfahren umfasst lokales Vordehnen (S100) von ersten Bereichen einer ersten Folie, wobei die ersten Bereiche entlang einer ersten Richtung verlaufen, so dass zweite Bereiche, die jeweils in der ersten Richtung verlaufen, definiert werden, wobei die ersten Bereiche jeweils zwischen zwei zweiten Bereichen angeordnet sind, und das Anordnen eines Gewebes (S110), welches einen Faden umfasst, wobei ein Teil des Fadens in einer Richtung verläuft, die die erste Richtung schneidet, über der ersten Folie. Das Verfahren umfasst ferner das Anordnen (S130) einer zweiten Folie über Gewebe und erster Folie, so dass sich das Gewebe zwischen erster und zweiter Folie befindet und das Miteinanderverbinden (S120) des Gewebes mit der Folie. Das Verfahren kann ferner das Auftragen (S140) eines Klebestoffs auf der ersten Folie und/oder zweiten Folie umfassen.

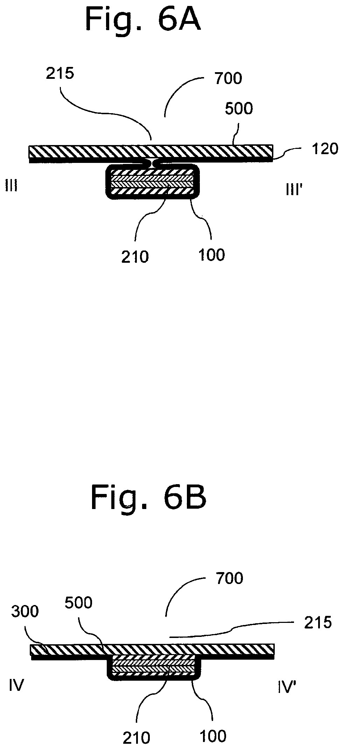

Zur Herstellung des beschriebenen Verpackungsmaterials werden erste Bereiche einer ersten Folie 100 lokal gedehnt. Dies kann beispielsweise dadurch erfolgen, dass die Folie über ein Formungselement 400 gelegt wird. Das Formungselement 400 weist hervorstehende Bereiche 410 auf, die sich senkrecht zur planaren Oberfläche erstrecken. Beispielsweise können die hervorstehenden Bereiche 410 dreiecksförmig ausgebildet sein, die sich beispielsweise in eine Höhe von 15 bis 35 mm erstrecken. Es ist selbstverständlich dass die Höhe h beliebig ausgewählt werden kann entsprechend der zu erzielenden Breite der gedehnten Bereiche. Die hervorstehenden Bereiche 410 können aber auch eine andere Form aufweisen, beispielsweise rechteckig oder halbkreisförmig. Gegebenenfalls kann Wärme, Druck oder Zug angewendet werden, um die Erzeugung der gedehnten Bereiche zu unterstützen. Sodann wird das Gewebe auf der Folie platziert. Dadurch, dass die Folie über das Formungselement 400 gelegt wird, befinden sich die zweiten Bereiche, die nicht gedehnt werden und an denen die Kettfäden 210₁, 210₂ des Gewebes anzuordnen sind, im "lokalen Minimum der potenziellen Energie" der Folie. Damit wird eine relative Positionierung des Gewebes 200 zu der Folie 100 erleichtert. Anschließend wird der Film zusammen mit dem Gewebe in Flussrichtung gedehnt, so dass er dünner wird und eine finale Festigkeit erzielt. Bei einem kontrollierten Dehnen kann auch die finale Elastizität eingestellt werden. Bei diesem finalen Dehnungsprozess versucht das Material in den ersten Bereichen, welches durch den Vordehnungsprozess geformt worden ist, seine Molekülketten auszurichten. Als Folge bildet das Material an den zweiten Bereichen 110 aufgrund des Dickenunterschieds röhrenförmige Streifen aus, in denen die Kettfäden 210₁, 210₂ des Gewebes eingeschlossen werden. Dies ist genauer in Figur 6A dargestellt und wird später beschrieben. Durch diesen Dehnprozess in Maschinenrichtung (X-Richtung) werden Folie 100 und Gewebe 200 miteinander verbunden.

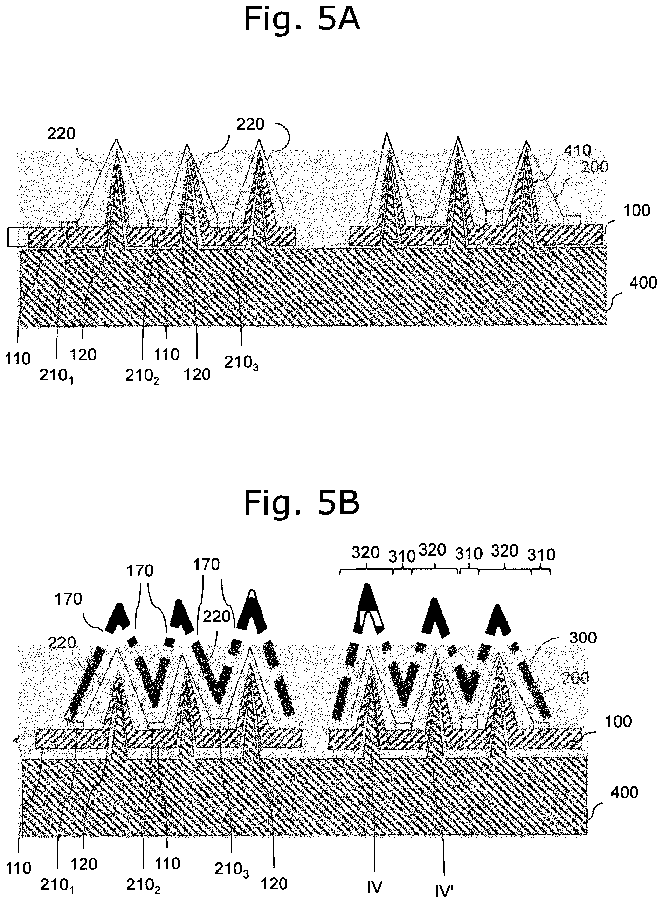

Dies kann in analoger Weise für das System mit zwei Folien erfolgen. Figur 5B zeigt einen Aufbau ähnlich zu dem in Figur 5A gezeigten, bei dem zusätzlich eine zweite Folie 300 über den Aufbau gelegt wird. Die zweite Folie 300 kann lokal durch das Auflegen auf das Formelement 400 vorgedehnt werden. Nach Dehnen in Fließrichtung ergibt sich dann ein Schichtaufbau mit erster Folie 100, Gewebe 200 und zweiter Folie 300. In Figur 5B sind als Beispiel Mikrolöcher 170 gezeigt. Diese können gemäß einem Ausführungsbeispiel in der ersten und/oder der zweiten Folie 100, 300 vorliegen.

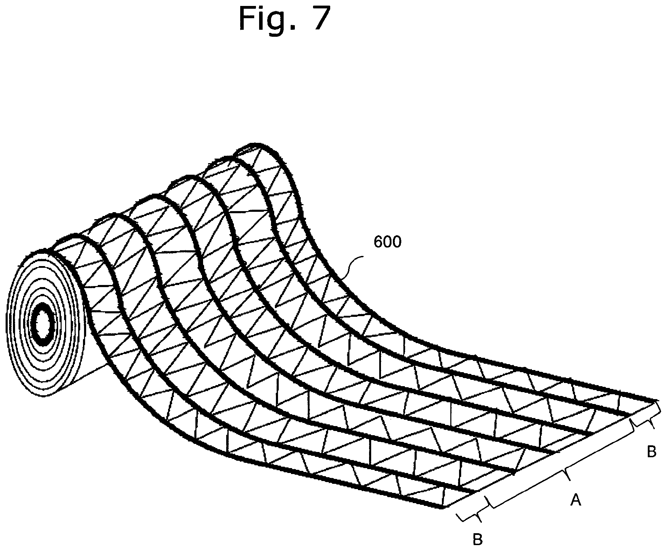

Schließlich wird das fertige Verpackungsmaterial in Rollen von 700 bis 3000 m aufgewickelt, wie beispielsweise in Figur 7 gezeigt ist.

Alternativ können die Schichten auch durch Thermo-Formen oder Thermo-Kleben zusammengefügt werden.

Beispielsweise werden erste Folie 100, Gewebe 200 und zweite Folie 300 wie in Figur 5B gezeigt übereinander gelegt und erhitzt und anschließend zusammengepresst, so dass sie chemisch miteinander verbunden werden und zwar insbesondere an den Stellen, an denen sich die Kettfäden 210₁, 210₂ befinden. Beispielsweise können die erste Folie 100 und die zweite Folie in der in Fig. 5B gezeigten Weise übereinander gelegt und miteinander verbunden werden. Sie können jedoch auch ohne Vordehnung als planare Schichten übereinander gelegt, erhitzt und anschließend zusammengepresst werden. Alternativ kann vor Zusammenfügen der einzelnen Bestandteile eine dünne Klebstoffschicht auf der Oberseite der ersten Folie 100 bzw. auf der Unterseite der zweiten Folie 300 aufgebacht werden. Die Schichten können durch Klebstoff oder durch Klebstoff und Hitze miteinander verbunden werden. Gemäß einem Ausführungsbeispiel kann das Verpackungsmaterial 600 eine erste Folie 100, ein Gewebe 200 und eine zweite Folie 300 umfassen, die übereinander angeordnet und miteinander verbunden sind. Das Gewebe kann Kettfäden 210₁, 210₂, ... 210ₙ in Fließrichtung des Gewebes und Schussfäden 220 aufweisen, wobei die Schussfäden 220 jeweils zwei benachbarte Kettfäden 210₁, 210₂ unter Bildung eines Zickzackmusters miteinander verbinden. An der Position der Kettfäden 210₁, 210₂, ... 210ₙ ist das Verpackungsmaterial lokal verstärkt.

Gemäß einer weiteren Ausführungsform kann eine Klebstoffschicht nach Zusammenfügen des Verbunds aufgebracht werden. Beispielsweise kann die Klebstoffschicht 500 auf das Verpackungsmaterial mit einer Folie 100 oder auf das Verpackungsmaterial mit zwei Folien 100, 300 aufgebracht werden. Beispielsweise kann die Klebstoffschicht auf nur eine der beiden Folien 100, 300 oder auf beide Folien aufgebracht werden. Wird die Klebstoffschicht auf nur eine der beiden Folien 100, 300 ergeben sich je nach Oberfläche des Verpackungsmaterials unterschiedliche Klebeigenschaften. Die Schichtdicke der Klebstoffschicht kann beispielsweise 2 bis 8 µm, vorzugsweise ungefähr 3 µm betragen.

Als Ergebnis erhält man ein verstärktes oder nicht-verstärktes Verpackungsmaterial mit guten Greifeigenschaften bezüglich der zu verpackenden Materialien. Die Komponenten des Verpackungsmaterials sind durch einfache Verfahren kostengünstig herstellbar, so dass das Verpackungsmaterial kostengünstig und einfach hergestellt werden kann. Durch die spezielle Kombination aus Folie und Gewebe weist das Verpackungsmaterial eine hohe Reißfestigkeit und große Elastizität bei einer relativ niedrigen Masse auf. Beispielsweise kann die Masse 3,5 g/laufender Meter bis 130 g/laufender Meter, beispielsweise 24 bis 40 g/laufender Meter betragen. Eine Folie aus Polyethylen mit geringer Dichte (LDPE) mit einer Dicke von 25 µm und einer Breite von 1500 mm kann beispielsweise eine Reißfestigkeit haben, die ungefähr 100 kg entspricht. Durch die Kombination mit einem Gewebe kann ein Verpackungsmaterial bereitgestellt werden, das eine Reißfestigkeit haben, die ungefähr 500 kg entspricht. Aufgrund seiner hohen Reißfestigkeit kann es für schwere Verpackungsgüter wie beispielsweise Paletten verwendet werden. Der Verbund aus Folien und Gewebe, wobei die Folien ihrerseits wieder mehrere Schichten aufweisen können, ist beispielsweise nicht-trennbar zusammengefügt, d.h. es findet keine Trennung der einzelnen Schichten auf.

Weiterhin ist es nicht erforderlich, spezielle Vorkehrungen zu treffen damit der Folienrand auf der Palette oder auf dem Heu- oder Strohballen gehalten wird. Der Film weist Klebstoffeigenschaften auf. Beispielsweise kann die Stärke des Klebstoffes so eingestellt werden, dass der Film auf dem zu verpackenden Material gehalten wird und ein Abwickeln des Verpackungsmaterials von dem zu verpackenden Gut verhindert.

Gemäß einer Ausführungsform kann das Gewebe breiter sein als die Folie. Beispielsweise kann das Gewebe eine Überbreite von 12% bis 160% bezogen auf die Breite der Folie aufweisen. Beim Anordnen von Folie und Gewebe können beispielsweise jeweils zwei Kettfäden an jeder Seite frei bleiben. Mit dem Verpackungsmaterial, bei dem jeweils zwei Kettfäden an jeder Seite frei bleiben, können beispielsweise zylinderförmige Verpackungsgüter wie Stroh- oder Heuballen verpackt werden. In diesem Fall wird die zylinderförmige Außenfläche (Mantelfläche) des Zylinders mit dem Teil des Verpackungsmaterials, dass die Folien 100, 300 enthält, umhüllt. Der Teil des Verpackungsmaterials, an dem die Kettfäden am seitlichen Rand nicht von der Folie umschlossen sind, bedeckt die planaren Seitenflächen des Zylinders. Auf diese Weise können die Verpackungsgüter sehr schnell ohne Materialverlust verpackt werden. Da der verpackte Strohballen an den planaren Seitenflächen nicht mit Folie sondern nur mit dem Gewebe bedeckt ist, ist eine atmungsaktive Lagerung des Verpackungsmaterials möglich, so dass dieses lange konserviert werden kann.

Gemäß einer weiteren Interpretation umfasst das Verpackungsmaterial 600 eine erste Folie 100 und ein Gewebe 200, die übereinander angeordnet und miteinander verbunden sin. Die erste Folie 100 weist Verstärkungsbereiche 110 auf, die entlang einer Längsrichtung, beispielsweise der X-Richtung des Verpackungsmaterials verlaufen. Das Gewebe weist Kettfäden 210₁, 210₂ auf, die in der ersten Richtung verlaufen. Die Kettfäden 210₁, 210₂ sind entlang der Verstärkungsbereiche 110 angeordnet. Die Verstärkungsbereiche 110 entsprechen somit den zweiten Bereichen, in denen die erste Folie 100 nicht lokal vorgedehnt ist.

Figur 6A zeigt eine vergrößerte Querschnittsansicht des Verbindungspunkts 215, beispielsweise zwischen III und III' wie in Figur 1A dargestellt. Wie zu sehen ist, bildet die erste Folie 100, insbesondere der zweite Bereich 210 eine Art schlauch- oder röhrenförmigen Abschnitt, in dem der Kettfaden 210 aufgenommen wird. Dadurch wird eine feste Verbindung zwischen Folie 100 und Gewebe 200 bereitgestellt, und es kann ein Verstärkungsbereich 700 ausgebildet werden. Optional kann einen Klebstoffschicht 500 über der Folie 100 vorgesehen sein.

Bei der in Figur 6B gezeigten Ausführungsform wird ein Laminat aus erster Folie 100, Gewebe 200 und zweiter Folie 300 ausgebildet. Die Kettfäden 210 sind sandwichartig zwischen erster Folie 100 und zweiter Folie 300 angeordnet. An der Position der Kettfäden 210 können Verstärkungsbereich 700 definiert werden. Auch hier kann optional eine Klebstoffschicht 500 auf der Oberseite bzw. Außenseite der zweiten Folie 300 vorgesehen sein.

Gemäß der in den Figuren 6A und 6B gezeigten Ausführungsform umfasst das Verpackungsmaterial beispielsweise eine erste Folie 100 und ein Gewebe 200, mit einer Vielzahl von Verstärkungsbereichen 700, die sich in einer ersten Richtung entlang der Länge des Verpackungsmaterials erstrecken. Die Verstärkungsbereiche 700 können beispielsweise schlauchartige Bereiche der ersten Folie 100 umfassen, wobei ein Kettfaden des Gewebes in dem schlauchartigen Bereich angeordnet ist. Gemäß einer Ausführungsform kann das Verpackungsmaterial 600 ferner eine zweite Folie 300 aufweisen. Der Verstärkungsbereich 700 kann jeweils an der Position der Kettfäden 210 durch die Kombination von erster Folie 100, Kettfaden 210 und zweiter Folie 300 ausgebildet werden.

Figur 7 zeigt ein Beispiel einer Rolle mit aufgewickeltem Verpackungsmaterial. Beispielsweise können etwa 700 bis 3000 m Verpackungsmaterial auf solch eine Rolle aufgewickelt werden. Aufgrund der geringen Masse des Verpackungsmaterials können viele Meter Verpackungsmaterial auf eine Rolle aufgewickelt werden. Die Breite des sich ergebenden Verpackungsmaterials 600 kann beispielsweise 123 cm betragen. Damit kann die Breite der üblichen Breite eines Gewebes 200 entsprechen, das mit einer üblichen Raschelmaschine erzeugt worden ist. In Fig. 7 zeigt der Bereich A denjenigen Bereich des Verpackungsmaterials, an dem erste Folie 100 und Gewebe 200 übereinander angeordnet sind. Im Bereich B liegt ausschließlich das Gewebe ohne Folie vor.

## Patentansprüche

1. Verpackungsmaterial (600) mit einer ersten Folie (100) und einem Gewebe (200), die übereinander angeordnet und miteinander verbunden sind,
wobei die erste Folie (100) eine Vielzahl erste Bereiche (120), in denen die erste Folie (100) lokal gedehnt ist, und eine Vielzahl zweite Bereiche (110), in denen die erste Folie (100) nicht lokal gedehnt ist, enthält und die ersten Bereiche (120) jeweils zwischen zwei zweiten Bereichen (110) angeordnet sind, wobei erste und zweite Bereiche jeweils in einer ersten Richtung verlaufen, und
das Gewebe (200) einen Faden (220) umfasst, wobei ein Teil des Fadens (220) in einer Richtung verläuft, die die erste Richtung schneidet.

2. Verpackungsmaterial (600) nach Anspruch 1, bei dem das Gewebe (200) Kettfäden (210₁, 210₂, ...210ₙ), die in der ersten Richtung verlaufen, aufweist, und der Faden (220) zwischen zwei benachbarten Kettfäden (210₁, 210₂, ...210ₙ) verläuft und ein Zickzackmuster ausbildet.

3. Verpackungsmaterial (600) nach Anspruch 2, bei dem die Kettfäden (210₁, 210₂, ...210ₙ) entlang der zweiten Bereiche (110) angeordnet sind.

4. Verpackungsmaterial (600) nach einem der vorhergehenden Ansprüche, bei dem die erste Folie (100) Mikrolöcher (170) enthält.

5. Verpackungsmaterial (600) nach einem der Ansprüche 1 bis 3, bei dem die erste Folie (100) als kontinuierliche Folie ohne Löcher ausgebildet ist.

6. Verpackungsmaterial (600) nach einem der vorhergehenden Ansprüche, bei dem die Folie mehrere Schichten aus verschiedenen Kunststoffen enthält.

7. Verpackungsmaterial (600) nach einem der vorhergehenden Ansprüche, weiterhin mit einer zweiten Folie (300),
wobei die zweite Folie (300) erste Bereiche (320), in denen die zweite Folie (300) lokal gedehnt ist, und zweite Bereiche (310), in denen die zweite Folie nicht lokal gedehnt ist, enthält und die ersten Bereiche (320) jeweils zwischen zwei zweiten Bereichen (310) angeordnet sind und in einer ersten Richtung verlaufen, und
das Gewebe (200) zwischen der ersten Folie (100) und der zweiten Folie (300) angeordnet ist.

8. Verpackungsmaterial (600) nach Anspruch 7, bei dem die erste Folie (100) aus einem anderen Material als die zweite Folie (300) aufgebaut ist.

9. Verpackungsmaterial (600) nach Anspruch 7 oder 8, bei dem Klebstoff (500) nur auf einer Außenseite der ersten Folie (100) aufgebracht ist.

10. Verpackungsmaterial (600) nach einem der Ansprüche 7 bis 9, bei dem die erste Folie (100) Mikrolöcher (170) aufweist und die zweite Folie (300) als kontinuierliche Schicht ohne Mikrolöcher ausgeführt ist.

11. Verpackungsmaterial (600) nach einem der vorhergehenden Ansprüche, bei dem das Gewebe (200) eine größere Breite als die erste Folie (100) aufweist, wobei die Breite senkrecht zur ersten Richtung gemessen wird.

12. Verfahren zur Herstellung von Verpackungsmaterial gemäß einem der Ansprüche 1 bis 11, mit:
lokales Vordehnen (S100) einer Vielzahl von ersten Bereichen einer ersten Folie, wobei die ersten Bereiche entlang einer ersten Richtung verlaufen, so dass eine Vielzahl zweiter Bereiche, die jeweils in der ersten Richtung verlaufen, definiert wird, wobei die ersten Bereiche jeweils zwischen zwei zweiten Bereichen angeordnet sind,
Anordnen eines Gewebes (S110), welches einen Faden umfasst, wobei ein Teil des Fadens in einer Richtung verläuft, die die erste Richtung schneidet, über der ersten Folie, und
Miteinanderverbinden (S120) des Gewebes mit der Folie.

13. Verfahren nach Anspruch 12, ferner mit Anordnen (S130) einer zweiten Folie über Gewebe und erster Folie, so dass sich das Gewebe zwischen erster und zweiter Folie befindet.

14. Verfahren nach Anspruch 12 oder 13, bei dem die erste Folie zusammen mit dem Gewebe in eine zweite Richtung, die senkrecht zur ersten Richtung verläuft, gedehnt wird.

15. Verfahren nach einem der Ansprüche 12 bis 14, bei dem das Miteinanderverbinden des Gewebes mit der Folie eine thermische Behandlung umfasst.

16. Verfahren nach einem der Ansprüche 12 bis 15 ferner mit Auftragen (S140) eines Klebstoffs auf der ersten Folie.

## Claims

1. A packaging material (600) comprising a first foil (100) and a woven fabric (200) that are arranged one above the other and connected to each other,
wherein the first foil (100) comprises a plurality of first regions (120) in which the first foil (100) is expanded locally, and a plurality of second regions (110) in which the first foil (100) is not expanded locally and each of the first regions (120) is arranged between two second regions (110), wherein the first and the second regions each run in a first direction, and
the woven fabric (200) comprises a thread (220), wherein a part of the thread (220) runs in a direction that intersects the first direction.

2. The packaging material (600) according to claim 1, in which the woven fabric (200) comprises warp threads (210₁, 210₂, ...210ₙ) that run in the first direction, and wherein the thread (220) runs between two neighboring warp threads (210₁, 210₂, ...210ₙ) and forms a zigzag pattern.

3. The packaging material (600) according to claim 2, in which the warp threads (210₁, 210₂, ...210ₙ) are arranged along the second regions (110).

4. The packaging material (600) according to any one of the preceding claims, in which the first foil (100) comprises micro holes (170).

5. The packaging material (600) according to any one of the preceding claims, in which the first foil (100) is formed as a continuous foil having no holes.

6. The packaging material (600) according to any one of the preceding claims, in which the foil comprises several layers made from different plastic materials.

7. The packaging material (600) according to any one of the preceding claims, further comprising a second foil (300), wherein the second foil (300) comprises first regions (320) in which the second foil (300) is expanded locally, and second regions (310) in which the second foil is not expanded locally and each of the first regions (320) is arranged between two second regions (310) and runs in a first direction, and
the woven fabric (200) is arranged between the first foil (100) and the second foil (300).

8. The packaging material (600) according to claim 7, in which the first foil (100) is formed from a material different from the second foil (300).

9. The packaging material (600) according to claim 7 or 8, in which adhesive (500) is applied only onto an outer side of the first foil (100).

10. The packaging material (600) according to any one of claims 7 to 9, in which the first foil (100) comprises micro holes (170) and the second foil (300) is formed as a continuous layer having no micro holes.

11. The packaging material (600) according to any one of the preceding claims, in which the woven fabric (200) has a larger width than the first foil (100), wherein the width is measured perpendicular to the first direction.

12. A method for producing of packaging material according to any one of claims 1 to 11, the method comprising:
locally expanding (S100) a plurality of first regions of a first foil, wherein the first regions run along a first direction such that a plurality of second regions is defined, each of which runs in the first direction, wherein the first regions are each arranged between to second regions,
arranging a woven fabric (S110) above the first foil, which woven fabric comprises a thread, wherein a part of the thread runs in a direction that intersects the first direction, and connecting (S120) the woven fabric and the foil with each other.

13. The method according to claim 12, further comprising arranging (S130) a second foil above the woven fabric and first foil such that the woven fabric is located between the first and the second foil.

14. The method according to claim 12 or 13, in which the first foil is expanded together with the woven fabric in a second direction that is perpendicular to the first direction.

15. The method according to any one of claims 12 to 14, in which connecting the woven fabric and the foil with each other comprises a thermal treatment.

16. The method according to any one of claims 12 to 15, further comprising applying (S140) an adhesive onto the first foil.

## Revendications

1. Matériau d'emballage (600) avec une première feuille (100) et un tissu (200), lesquels sont superposés et reliés entre eux,
dans lequel la première feuille (100) contient une pluralité de premières régions (120) dans lesquelles la première feuille (100) est étirée localement, et une pluralité de deuxièmes régions (110) dans lesquelles la première feuille (100) n'est pas étirée localement, et les premières régions (120) sont disposées respectivement entre deux deuxièmes régions (110), des premières et deuxièmes régions s'étendant respectivement dans une première direction, et
le tissu (200) comporte un fil (220), une partie du fil (220) s'étendant dans une direction coupant la première direction.

2. Matériau d'emballage (600) selon la revendication 1, dans lequel le tissu (200) présente des fils de chaîne (210₁, 210₂, ...210ₙ) s'étendant dans la première direction, et le fil (220) s'étend entre deux fils de chaîne (210₁, 210₂, ...210ₙ) voisins et forme un motif en zigzag.

3. Matériau d'emballage (600) selon la revendication 2, dans lequel les fils de chaîne (210₁, 210₂, ...210ₙ) sont disposés le long des deuxièmes régions (110).

4. Matériau d'emballage (600) selon l'une des revendications précédentes, dans lequel la première feuille (100) contient des micro-trous (170).

5. Matériau d'emballage (600) selon l'une des revendications 1 à 3, dans lequel la première feuille (100) est formée comme une feuille continue sans trous.

6. Matériau d'emballage (600) selon l'une des revendications précédentes, dans lequel la feuille contient plusieurs couches de différentes matières plastiques.

7. Matériau d'emballage (600) selon l'une des revendications précédentes, comprenant en outre une deuxième feuille (300),
dans lequel la deuxième feuille (300) contient des premières régions (320) dans lesquelles le deuxième feuille (300) est étirée localement, et des deuxièmes régions (310) dans lesquelles le première feuille n'est pas étirée localement, et les premières régions (320) sont disposées respectivement entre deux deuxièmes régions (310) et s'étendent dans une première direction, et
le tissu (200) est disposé entre la première feuille (100) et la deuxième feuille (300).

8. Matériau d'emballage (600) selon la revendication 7, dans lequel la première feuille (100) est constituée d'un autre matériau que la deuxième feuille (300).

9. Matériau d'emballage (600) selon la revendication 7 ou 8, dans lequel une colle (500) n'est appliquée que sur une face extérieure de la première feuille (100).

10. Matériau d'emballage (600) selon l'une des revendications 7 à 9, dans lequel la première feuille (100) présente des micro-trous (170) et la deuxième feuille (300) est conçue comme une couche continue sans micro-trous.

11. Matériau d'emballage (600) selon l'une des revendications précédentes, dans lequel le tissu (200) présente une largeur supérieure à celle de la première feuille (100), dans lequel la largeur est mesurée par perpendiculairement à la première direction.

12. Procédé pour la fabrication d'un matériau d'emballage selon l'une des revendications 1 à 11, comprenant :
le pré-étirage local (S100) d'une pluralité de premières régions d'une première feuille, les premières régions s'étendant le long d'une première direction, de manière à définir une pluralité de deuxièmes régions s'étendant respectivement dans la première direction, les premières régions étant disposées respectivement entre deux deuxièmes régions,
agencement d'un tissu (S110) comportant un fil sur la première feuille, une partie du fil s'étendant dans une direction coupant la première direction, et
assemblage (S120) du tissu avec la feuille.

13. Procédé selon la revendication 12, comprenant en outre l'agencement (S130) d'une deuxième feuille sur le tissu et la première feuille, de telle façon que le tissu se trouve entre la première et la deuxième feuille.

14. Procédé selon la revendication 12 ou 13, dans lequel la première feuille est étirée ensemble avec le tissu dans une deuxième direction s'étendant perpendiculairement à la première direction.

15. Procédé selon l'une des revendications 12 à 14, dans lequel l'assemblage du tissu avec la feuille comporte un traitement thermique.

16. Procédé selon l'une des revendications 12 à 15, comprenant en outre l'application (S140) d'une colle sur la première feuille.
